Europäisches Patentamt

European Patent Office

Office européen des brevets

(11) Veröffentlichungsnummer: **0 282 615**
**A1**

## (12) EUROPÄISCHE PATENTANMELDUNG

(21) Anmeldenummer: 87103901.2

(22) Anmeldetag: 17.03.87

(51) Int. Cl.4: **B61K 9/12** , G01M 17/02

(43) Veröffentlichungstag der Anmeldung:
21.09.88 Patentblatt 88/38

(84) Benannte Vertragsstaaten:
**AT CH DE FR GB LI NL SE**

(71) Anmelder: **SIGNALTECHNIK GmbH**
**Ernst-Sachs-Strasse 2**
**D-5400 Koblenz(DE)**

(72) Erfinder: **Berndt, Dietmar, Dr.**
**Im Baumstück 4**
**D-5400 Koblenz(DE)**

(74) Vertreter: **Riecke, Manfred**
**Neuköllner Strasse 8**
**D-6333 Braunfels(DE)**

(54) **Anordnung zum Detektieren von Radschäden.**

(57) Die Erfindung betrifft eine Anordnung zum Detektieren von Unregelmäßigkeiten in der geometrischen Form von Rädern von Schienenfahrzeugen. Die Anordnung zeichnet sich dadurch aus, daß ein Beschleunigungsaufnehmer linearer Ausdehnung unterhalb der Lauffläche der Schiene mit dieser fest verbunden ist. Der Beschleunigungsaufnehmer besitzt über seine ganze Länge eine gleichbleibende Empfindlichkeit und liefert eine der Beschleunigung der Schiene proportionale Spannung. Bei den verschiedenen Schadensarten erfolgt die Beschleunigung der Schiene in entgegengesetzten Richtungen, so daß die Spannungsamplitude, je nach Schadensart, entgegengesetzte Polaritäten besitzt. Durch Frequenzfilterung oder Frequenzanalyse können weitere Kriterien zur Charakterisierung des Radschadens, zusammen mit anderen gewichteten Parametern, gewonnen werden.

Fig.1

Amplituden- und Polaritätsfolgeauswertung

Die Erfindung betrifft eine Anordnung zur Detektion von sogenannten Flachstellen und Aufschweißungen an Rädern von Schienenfahrzeugen.

Häufig kommt es durch Schäden auf der Lauffläche von Rädern schienengebundener Fahrzeuge zu Unregelmäßigkeiten im Abrollverhalten. Solche Schäden können sein:

-Flachstellen durch Materialfehler, durch Materialaufbrüche, durch Schleifstellen, die durch feste Bremsen hervorgerufen sind, oder

-Materialaufhäufungen (sogenannte Aufschweißungen), die durch über längere Zeit - schleifende Bremsen am Radumfang Bremsbackenmaterial und/oder Abrieb des Radkranzes aufbacken.

Dadurch hervorgerufene Laufunregelmäßigkeiten beim Radabrollen auf der Schiene können unmittelbar oder mittelbar Ursache für Behinderungen im Bahnbetrieb sein. So können z.B. Schäden am Achslager durch immer an demselben Punkt periodisch auftretende Beschleunigungsbelastungen verursacht werden. Es können aber auch Schienenbrüche hervorgerufen werden, was vorzugsweise bei niedrigeren Temperaturen der Fall ist. In jedem Falle führen solche Laufunregelmäßigkeiten aber zu einer Lärmbelästigung der Umwelt. All diese Effekte gehen unmittelbar durch notwendig werdende Reparaturen oder Schutzmaßnahmen (Lärm) in die Wirtschaftlichkeit eines Bahnbetriebes ein.

Es wurden daher in der Vergangenheit unterschiedliche Meßanordnungen untersucht und zum Teil auch realisiert, um Flachstellen, differenziert nach ihrem Ausmaß und einem ganz bestimmten Rad, mindestens jedoch drehgestellzugeordnet, detektieren zu können. So ist es beispielsweise Stand der Technik, für die Ortung von solchen Laufunregelmäßigkeiten das Amplitudenverhalten von Hochfrequenz-Gleisstromkreisen beim Überfahren eines mit einer Flachstelle behafteten Rades auszuwerten, wobei der Meßeffekt in einer Widerstandsänderung zwischen den beiden Schienen eines Gleises beim "Abhüpfen" eines Rades liegt. Weiter werden als Meßaufnehmer, beispielsweise Dehnungsmeßstreifen (DMS), verwendet, die, befestigt an der Schiene, ihren Widerstand ändern, wenn die Schiene durch das Auftreffen einer Flachstelle horizontal durchgebogen wird. Ebenso kann der Schlag einer Flachstelle auf die Schiene durch einen an dieser befestigten Piezobeschleunigungsaufnehmer festgestellt werden.

All diesen Vorrichtungen ist gemeinsam,daß ihre Empfindlichkeit entlang eines Schienenstückes stark unlinear ist (Hochfrequenz-Gleisstromkreis) oder die Sensitivität des Aufnehmers gar nur um einen ganz engen Bereich um den Montageort des Aufnehmers herum (einige Zentimeter nach jeder Seite) entlang der Schiene gegeben ist. Dieser auf der Physik der Aufnahmemethode resultierende Tatbestand ist eine sehr starke Einschränkung für die zuverlässige Detektierung oder gar Klassifizierung eines Radschadens, da ja die Schadstelle irgenwo am Radumfang befindlich ist und somit der Auftreffpunkt in Bezug auf die Sensorposition an der Schiene undefiniert ist. So hilft man sich nach dem Stand der Technik entweder mit sehr aufwendigen Auswertealgorithmen, um eine gewisse Linearität der Meßantwort herzustellen (beim Hochfrequenz-Gleisstromkreis beispielsweise) oder indem man Reihen von Sensoren mit sich berührenden oder überlappenden Empfindlichkeitsbereichen entlang der Schiene installiert. Auch dies ist keine befriedigende Methode aufgrund der aufwendigen Installationsprozedur, der nicht unerheblichen Sensorkosten und der daraus folgenden Auswerteapparatur für eine Vielzahl von Sensoren. Dies gilt insbesondere für DMS und lokal wirkende Beschleunigungsaufnehmer.

Der Erfindung liegt die Aufgabe zugrunde, diese oben beschriebenen Einschränkungen und Nachteile zu überwinden.

Diese Aufgabe ist gemäß der Erfindung durch eine Anordnung gelöst, welche die im Anspruch 1 angegebenen Merkmale aufweist.

Die Anordnung zeichnet sich durch die Verwendung eines neuartigen Sensors aus, der eine lineare Ausdehnung hat und und über eine praktisch beliebig lange Strecke eine gleichbleibende und hohe Empfindlichkeit aufweist. Dieser Sensor ist ein Beschleunigungsaufnehmer, der entleng eines Schienenstückes unterhalb der Lauffläche der Schiene an dieser befestigt ist.

Konkret kommen als Sensoren hierfür in Frage beispielsweise Piezo-Kabel, bei denen piezoelektronisches Keramikpuder in synthetischem Gummi zu einem Kabel verarbeitet ist oder geeignete Polymere in Form von Folien oder Kabeln, wie z.B. PVDF, Polyvinilfluorid oder Polyvinilchlorid, die ebenfalls einen piezo-elektrischen Effekt aufweisen.

Die Anordnung besteht nun darin, einen solchen gestreckten Sensor an geeigneter Stelle der Schiene derart fest mit der Schiene zu verbinden, daß entlang der gesamten Sensorstrecke der Sensor mechanisch hart an die Schiene gekoppelt ist, so daß Beschleunigungen der Schiene entlang jedem Punkt des Sensors auf diesen übertragen werden. Dabei kann der Sensor an der Schiene unter dem Schienenkopf, am Schienensteg in Höhe der Schwerlinie oder am Schienenfuß befestigt sein. Die Befestigung kann durch Kleben oder Schweißen geschehen.

In der Zeichnung ist die Erfindung in einem Ausführungsbeispiel dargestellt. Es zeigen:

Fig. 1 schematisch ein Prinzipschaltbild der Detektierungsanordnung,

Fig. 2 schematisch die feste Verbindung des Beschleunigungsaufnehmers mit der Schiene,

Fig. 3a und 3b schematisch die möglichen Radschäden und die von ihnen hervorgerufenen Signalformen,

Fig. 4 schematisch ein Prinzipschaltbild der Detektierungsanordnung mit einer Frequenzfilterstufe,

Fig. 5 schematisch ein Prinzipschaltbild der Detektierungsanordnung mit Frequenzanalyse des Signals.

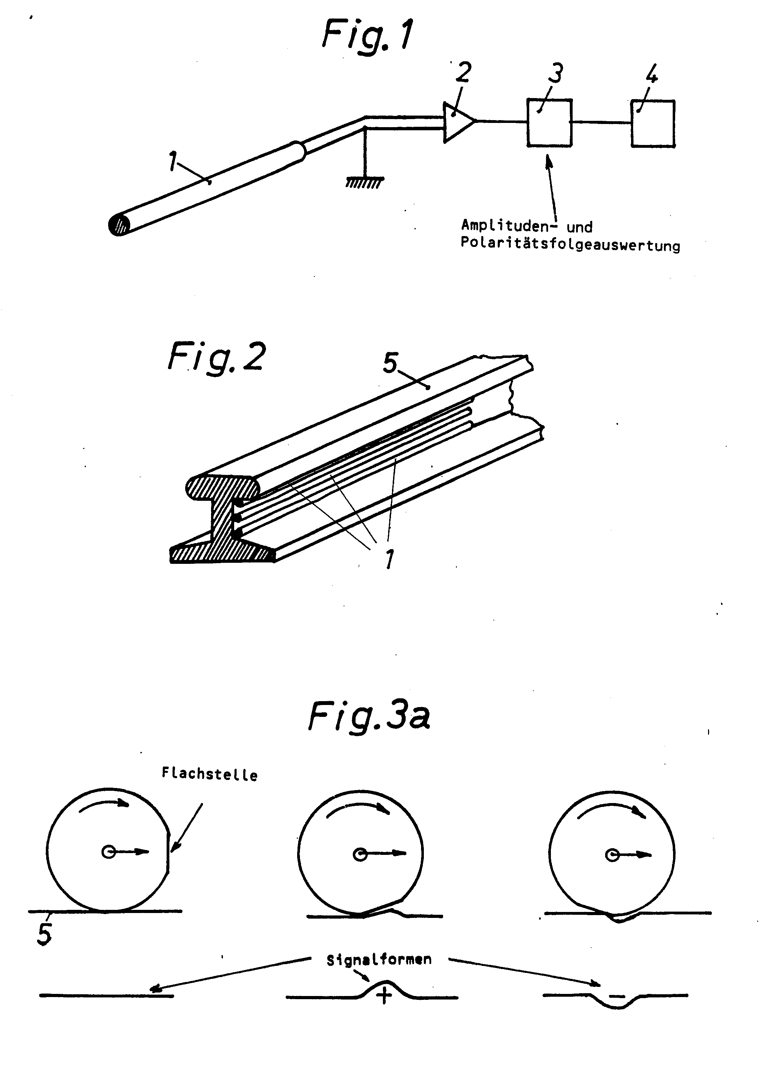

In Fig.1 ist die Detektierungsanordnung - schematisch dargestellt. Mit 1 ist ein Beschleunigungsaufnehmer linearer Ausdehnung bezeichnet, der z.B. ein Piezo-Kabel sein kann. An ihn ist ein ladungsempfindlicher Verstärker 2 angeschlossen, dem eine Auswerteelektronik 3 und ein Anzeiger 4 nachgeschaltet sind.

Die Auswerteelektronik kann dazu dienen sowohl die Amplitude als auch die Polaritätsfolge des vom Beschleunigungsaufnehmer 1 gelieferten Signals auszuwerten.

Die Anbringung des Beschleunigungsaufnehmers 1 an der Schiene ist aus Fig 2 ersichtlich. Die Schiene ist mit 5 bezeichnet, an welcher der Beschleunigungsaufnehmer 1 an verschiedenen Orten, wie dargestellt, angebracht, z.B. angeklebt sein kann. Die Art der Anbringung spielt keine Rolle, es kommt lediglich auf die feste Verbindung mit der Schiene an.

Das mit der beschriebenen Detektierungsanordnung durchführbare Detektierungsverfahren beruht darauf, daß ein Beschleunigungsaufnehmer der gezeigten Art eine elektrische Ladung Q erzeugt, die,mittels des ladungsempfindlichen Verstärkers 2 in eine Meßspannung umgewandelt, in einem weiten Bereich von Bescheleunigungen (einige g bis einige tausend g) weitgehend linear und ein Maß für die aufgetretene Beschleunigung ist. Der Vorteil der linearen Abhängigkeit der Meßantwort von der Meßgröße ist nutzbar, wenn, egal wo die Störstelle im Rad auf die Schiene aufschlägt, die Empfindlichkeit des Beschleunigungsaufnehmers konstant ist. Dies ist nur bei Verwendung eines oben beschriebenen Beschleunigungsaufnehmers in der gezeigten Anordnung erreichbar. Daraus resultiert nun eine relativ leichte einkanalige Auswerteprozedur, die, in Abhängigkeit von anderen gewichteten Parametern, wie z.B. Geschwindigkeit und Gewicht eines Fahrzeuges, und mit diesen mathematisch verkoppelt, eine zuverlässige Aussage über das Ausmaß eines Radschadens liefert.

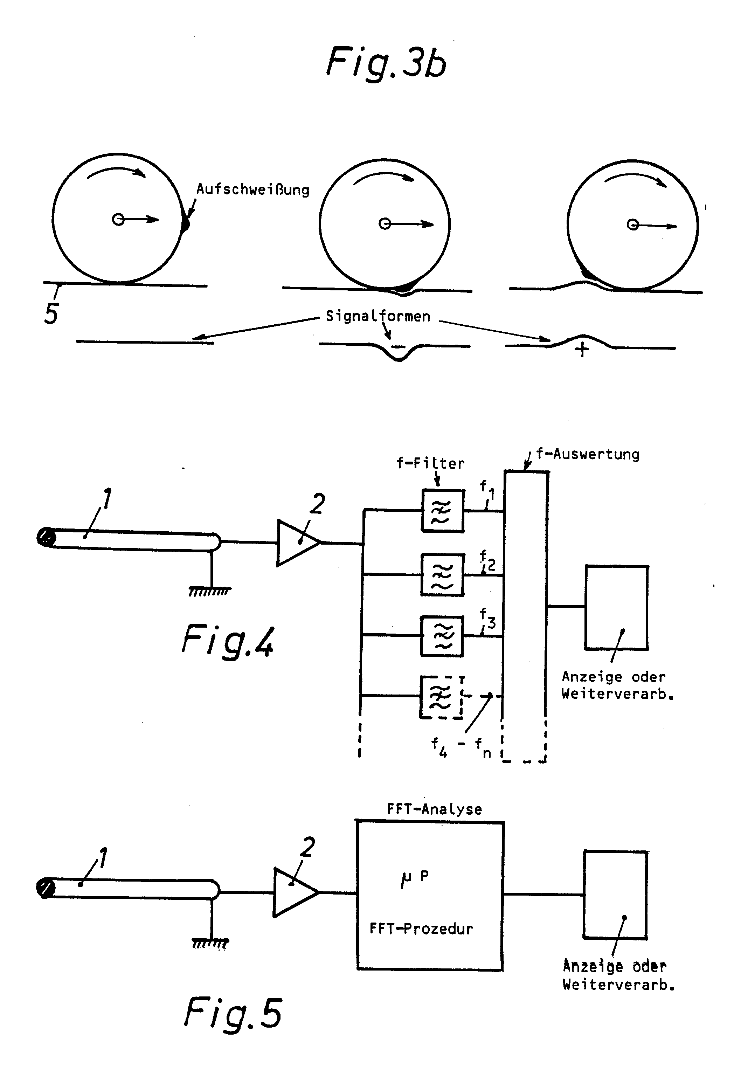

Ferner bietet die im Prinzip beschriebene Anordnung auch die Möglichkeit einer weitergehenden Analyse bestimmter Charakteristika der Meßsignale, die Auskunft über die Art des Radschadens geben können. So ist es denkbar, neben der Amplitude des Signals auch dessen Polarität zur Charakterisierung des Radschadens heranzuziehen. Trifft z.B. eine Aufschweißung auf die Schiene über dem Beschleunigungsaufnehmer auf, so wird die Schiene zunächst vertikal nach unten beschleunigt, um anschließend ganz kurz nach oben durchzuschwingen, bevor die glatte Lauffläche des Rades wieder auf ihr aufliegt. Dies hat eine bestimmte Polarität des Meßpulses mit anschließender Umladung, d.h. Vorzeichenumkehr, zur Folge (Fig. 3b).

Umgekehrt beim Auftreffen einer Flachstelle: hier wird die Schiene beim "Abhüpfen" des Rades kurz entlastet und wird nach oben durchschwingen, um dann, von der Kante der Flachstelle getroffen, vertikal nach unten beschleunigt zu werden. In diesem Falle liefert der Beschleunigungsaufnehmer ebenfalls ein bipolares Signal, jedoch mit genau umgekehrter Vorzeichenfolge. Diese läßt sich dann leicht in geeigneter Weise zur Charakterisierung des Radschadentyps bei der Auswertung heranziehen (Fig.1 in Verbindung mit Fig.3a). Wie bereits ausgeführt, ist dieses Meßverfahren nur ausführbar, wenn der Beschleunigungsaufnehmer konstante Empfindlichkeit über mindestens die Länge des Abrollumfanges eines solchen schadhaften Rades hat.

Weiterhin können mit der oben genannten Anordnung weitere Kriterien zur näheren Beschreibung des Schadensausmaßes gewonnen werden. So ist z.B., verknüpft mit anderen gewichteten Parametern, wie z.B. Geschwindigkeit und Radlast, das Frequenzspektrum des Beschleunigungspulses, von wesentlicher Aussagekraft über das Schadensausmaß.Dazu wird ein Meßverfahren vorgeschlagen, welches mittels geeigneter Frequenzfilterstufen (Fig. 4) und/oder einer FFT-Analyse (Fig.5), die mit heutigen schnellen Mikroprozessoren überaus schnell und zuverlässig bewerkstelligt werden kann, weitere Kriterien aus dem Meßsignal ausfiltern kann, die für bestimmte Radzustände charakteristisch sind.

Für dieses Meßverfahren kommt der vorgeschlagenen Anordnung zugute, daß die vorgechlagenen Typen von Beschleunigungsaufnehmern in einem weiten Frequenzbereich zur Signalabgabe angeregt werden können, die Empfindlichkeit des Meßsystems jenseits der Enden des gestreckten Beschleunigungsaufnehmers jedoch sehr schnell verschwindet. Die Empfindlichkeit eines Beschleunigungsaufnehmers einer wohldefinierten Strecke entlang, ist wsentlich Voraussetzung für eine solche Frequenzanalyse, da weiter außerhalb des Beschleunigungsaufnehmers auftretende Ereignisse auf die Schiene, nicht zum Meßsignal beitragen und somit ein hinreichender Signal-Rauschabstand gewährleistet ist. Dies zeichnet die vorgeschlagene Anordnung wesentlich vor anderen Anordnungen und Verfahren, wie z.B. Körperschallakustik in der Schiene aus, da letztere beispielsweise weit entfernte Schallereignisse auf der Schiene ebenfalls aufnehmen, so daß beispielsweise ein mit mehreren Radschäden behafteter Zug über weite Strecken ein wirres Gemisch von Schallereignissen an einen solchen Sensor liefert, was eine gezielte Auswertung praktisch unmöglich macht.

**Ansprüche**

1.) Anordnung zum Detektieren von Unregelmäßigkeiten in der geometrischen Form von Rädern von Schienenfahrzeugen,
dadurch gekennzeichnet, daß ein Beschleunigungsaufnehmer (1) linearer Ausdehnung in einer Länge, die mindestens gleich oder größer als der Umfang des größten zu detektierenden Rades ist, unterhalb der Lauffläche der Schiene (5) in deren Längsrichtung mit der Schiene fest verbunden ist.

2.) Anordnung nach Anspruch 1, dadurch gekennzeichnet, daß der Beschleunigungsaufnehmer (1) ein Piezo-Kabel ist.

3.) Anordnung nach den Ansprüchen 1 und 2, dadurch gekennzeichnet, daß dem Beschleunigungsaufnehmer (1) ein ladungsempfindlicher Verstärker (2) zur Erkennung der Polarität der Signalfolge ( +/- oder -/+ = Flachstelle oder Aufschweißung) und eine Auswerteelektronik (3) nachgeschaltet sind.

4.) Anordnung nach den Ansprüchen 1 und 2, dadurch gekennzeichnet, daß dem Beschleunigungsaufnehmer (1) ein ladungsempfindlicher Verstärker (2), ein Frequenzfilter und ein elektronisches Bauelement zur Frequenz-Auswertung nachgeschaltet sind.

5.) Anordnung nach den Ansprüchen 1 und 2, dadurch gekennzeichnet, daß dem Beschleunigungsaufnehmer (1) ein ladungsempfindlicher Verstärker (2) und ein elektronisches Bauelement zur Durchführung einer FFT-Analyse nachgeschaltet sind.

## Fig.1

1

2

3

4

Amplituden- und
Polaritätsfolgeauswertung

## Fig.2

5

1

## Fig.3a

Flachstelle

5

Signalformen

+

−

0 282 615

## Fig.3b

Aufschweißung

Signalformen

5

## Fig.4

f-Filter

f-Auswertung

$f_1$

$f_2$

$f_3$

$f_4 - f_n$

Anzeige oder Weiterverarb.

1

2

## Fig.5

FFT-Analyse

$\mu$ P

FFT-Prozedur

Anzeige oder Weiterverarb.

1

2

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl.4) |
|---|---|---|---|
| Y | DE-A-3 309 908 (MESSERSCHMITT-BÖLKOW-BLOHM GmbH) * Zusammenfassung; Seite 5, letzter Absatz * | 1 | B 61 K 9/12 G 01 M 17/02 |
| Y | DE-A-1 192 230 (SIEMENS & HALSKE AG) * Insgesamt * | 1 | |
| A | FR-A-2 575 827 (ETAT FRANCAIS) * Zusammenfassung * | 2 | |
| A | WO-A-8 601 167 (K.R.S. HALLBERG) * Zusammenfassung * | 1 | |

RECHERCHIERTE
SACHGEBIETE (Int. Cl.4)

B 61 K 9
G 01 M 17

Der vorliegende Recherchenbericht wurde für alle Patentansprüche erstellt

| Recherchenort | Abschlußdatum der Recherche | Prüfer |
|---|---|---|
| DEN HAAG | 19-11-1987 | VAN ASSCHE P.O. |